# EUROPEAN PATENT APPLICATION

(11) **EP 4 095 801 A1**
(43) Date of publication of application: **30.11.2022**
(21) Application number: 21913197.6
(22) Date of filing: 07.09.2021
(51) Int. Cl.: G06T 7/10, G06K 9/62

(54) **METHODS AND APPARATUSES FOR IMAGE SEGMENTATION MODEL TRAINING AND FOR IMAGE SEGMENTATION**

(30) Priority: 28.12.2020 CN 202011574785
(71) Applicant: Beijing Dajia Internet Information Technology Co., Ltd., Beijing 100085 (CN)
(72) Inventor: SHEN, Shiwei, Beijing 100085 (CN); LI, Jiahong, Beijing 100085 (CN); LI, Size, Beijing 100085 (CN)
(74) Representative: Vossius & Partner Patentanwälte Rechtsanwälte mbB
(86) International application number: PCT/CN2021/117037
(87) International publication number: WO 2022/142450

(57) **Abstract**

An image segmentation model training method and apparatus, an image segmentation method and apparatus, and an electronic device. The image segmentation model training method comprises: acquiring target category feature information that represents category features of a training sample and a prediction sample, and associated scene feature information thereof; performing splicing processing on the target category feature information and the associated scene feature information; inputting first spliced feature information obtained by the splicing processing into an initial generation network to perform image synthesis processing; inputting a first synthesized image obtained by the synthesis processing into an initial determination network to determine authenticity; inputting the first synthesized image into a classification network of an initial image segmentation model to perform image segmentation, so as to obtain a first image segmentation result; and training the classification network of the initial image segmentation model on the basis of a first image determination result, the first image segmentation result, and the target category feature information, so as to obtain a target image segmentation model.

## Description

### CROSS-REFERENCE TO RELATED APPLICATIONS

The present application proposes and claims the benefit of priority to Chinese Patent Application No. 202011574785.5 filed on December, 28, 2020, the entire contents of which are incorporated herein by reference in their entireties for all purposes.

### TECHNICAL FIELD

The present disclosure relates to the technical field of artificial intelligence, and in particular, to a method for training an image segmentation model, a method for image segmentation, an apparatus, and an electronic device.

### BACKGROUND

Artificial intelligence (AI) technology is a comprehensive discipline, involving a wide range of fields both of hardware-level technology and software-level technology. Among them, image segmentation using artificial intelligence technology plays an important role in video surveillance, public safety and other fields.

In the related art, due to the high cost and difficulty of constructing training samples, the zero-shot segmentation technical solutions for automatically synthesizing image pixel features based on word vectors of unknown categories are very popular in the industry.

### SUMMARY

According to a first aspect of the present disclosure, there is provided a method for training an image segmentation model including: acquiring target category feature information and associated scene feature information of the target category feature information, where the target category feature information represents a category feature of a training sample and a prediction sample; obtaining first spliced feature information by performing splicing processing on the target category feature information and the associated scene feature information; obtaining a first synthesized image by performing image synthesis processing through inputting the first spliced feature information into an initial generation network; obtaining a first image discrimination result by determining authenticity through inputting the first synthesized image into an initial discrimination network; obtaining a first image segmentation result by performing image segmentation through inputting the first synthesized image into a classification network of an initial image segmentation model ; and obtaining a target image segmentation model by training the classification network of the initial image segmentation model based on the first image discrimination result, the first image segmentation result and the target category feature information.

According to a second aspect of the present disclosure, there is provided an apparatus for training an image segmentation model, including: a feature information acquisition module, configured to perform acquiring target category feature information and associated scene feature information of the target category feature information, where the target category feature information represents a category feature of a training sample and a prediction sample; a first splicing processing module, configured to perform obtaining first spliced feature information by splicing processing on the target category feature information and the associated scene feature information; a first image synthesis processing module, configured to perform obtaining a first synthesized image by performing image synthesis processing through inputting the first spliced feature information into an initial generation network; a first authenticity discrimination module, configured to perform obtaining a first image discrimination result by determining authenticity through inputting the first synthesized image into an initial discrimination network; a first image segmentation module, configured to perform obtaining a first image segmentation result by performing image segmentation through inputting the first synthesized image into a classification network of an initial image segmentation model; and a model training module, configured to perform obtaining a target image segmentation mode by training the classification network of the initial image segmentation model on the basis of the first image discrimination result, the first image segmentation result and the target category feature information.

According to a third aspect of the present disclosure, there is provided a method for image segmentation, including: obtaining an image to be segmented; obtaining a target segmentation image by performing image segmentation on the image to be segmented through inputting the image to be segmented into a target image segmentation model obtained by a method for training an image segmentation model described in the first aspect.

According to a fourth aspect of the present disclosure, there is provided an apparatus for image segmentation, including: an image to be segmented acquisition module, configured to perform obtaining an image to be segmented; a third image segmentation module, configured to perform obtaining a target segmentation image by performing image segmentation on the image to be segmented through inputting the image to be segmented into a target image segmentation model obtained by a method for training an image segmentation model described in the first aspect.

According to a fifth aspect of the equipment, there is provided an electronic device, including: a processor and a memory configured to store an instruction executable by the processor; where, the processor is configured to execute the instruction to implement the method described in the first or third aspect above.

According to a sixth aspect of the present disclosure, there is provided a computer-readable storage medium. When an instruction in the storage medium is executed by a processor of an electronic device, the method described in the first or third aspect of the present disclosure is executed by the electronic device.

According to a seventh aspect of the present disclosure, there is provided a computer program product including an instruction, when running on a computer, the method described in the first or third aspect of the present disclosure is executed by the computer.

By acquiring the corresponding category features of the training samples and the prediction samples as the training data of the initial image segmentation model, the recognition ability of the trained target image segmentation model for unknown categories is improved. By acquiring associated scene feature information of the target category feature information, the prediction of the scene in which a certain category of segmentation objects appears is realized, and then it is ensured that the limit of the scene in which the category appears is increased when the image pixel features are automatically synthesized on the basis of the word vector of an unknown category or a known category, such that the training of the image segmentation model is more focused on the synthesis of image pixel features in a specific scene, so as to better adjust the classification network in zero-shot image segmentation training using the scene context, with the accuracy of zero-shot segmentation being greatly improved.

### BRIEF DESCRIPTION OF THE DRAWINGS

Fig. 1 is a schematic diagram of an application environment according to an embodiment.
Fig. 2 is a flowchart of a method for training an image segmentation model according to an embodiment;
Fig.3 is a flowchart of a method for acquiring associated scene feature information according to an embodiment;
Fig.4 is a flowchart of a method for image segmentation model pre-training according to an embodiment;
Fig. 5 is a flowchart of a method for image segmentation method according to an embodiment;
Fig. 6 is a block diagram of an apparatus for an image segmentation model training according to an embodiment;
Fig. 7 is a block diagram of an apparatus for image segmentation according to an embodiment;
Fig. 8 is a block diagram of an electronic device for image segmentation model training or image segmentation according to an embodiment;
Fig. 9 is a block diagram of an electronic device for image segmentation model training or image segmentation according to an embodiment.

### DETAILED DESCRIPTION

In order to make those skilled in the art better understand the technical solutions of the present disclosure, the technical solutions in the embodiments of the present disclosure will be clearly and completely described below with reference to the accompanying drawings.

It should be noted that the terms "first", "second" and the like in the description and claims of the present disclosure and the above drawings are used to distinguish similar objects, and are not necessarily used to describe a specific order or sequence. It should be understood that the data so used may be interchanged under appropriate circumstances so that the embodiments of the present disclosure described herein may be practiced in sequences other than those illustrated or described herein. The implementations described in the illustrative examples below are not intended to represent all implementations consistent with this disclosure. On the contrary, they are merely examples of methods and apparatuses consistent with some aspects of the present disclosure as recited in the appended claims.

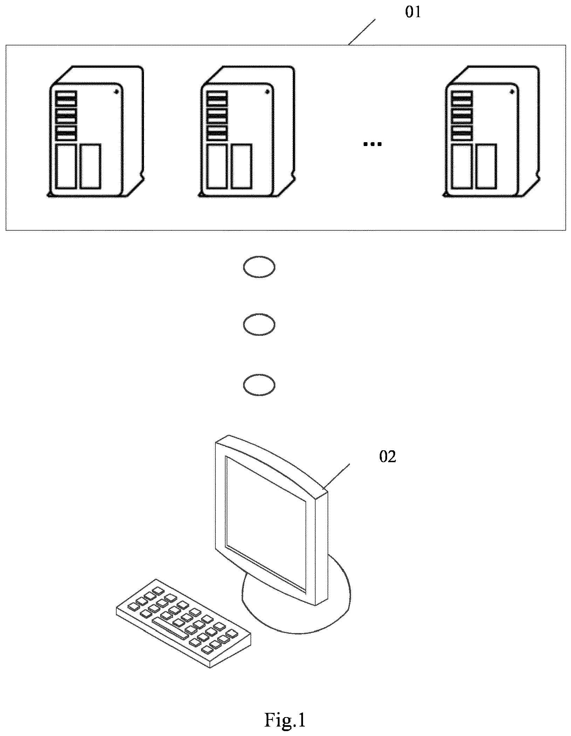

Please refer to Fig. 1, which is a schematic diagram of an application environment according to an embodiment. As shown in Fig. 1, the application environment may include a server 01 and a terminal 02.

In an embodiment, the server 01 may be used to train a target image segmentation model being able to perform image segmentation. In some embodiments of the present disclosure, the server 01 may be an independent physical server, or a server cluster or distributed system composed of multiple physical servers, or may be cloud servers providing cloud services, cloud databases, cloud computing, cloud functions, cloud storage, network services, cloud communications, middleware services, domain name services, security services, Content Delivery Network(CDN), and basic cloud computing services such as big data and artificial intelligence platforms.

In an embodiment, the terminal 02 may perform image segmentation processing in combination with the image segmentation model trained by the server 01. In some embodiments of the present disclosure, the terminal 02 may include, but is not limited to, a smart phone, a desktop computer, a tablet computer, a laptop computer, a smart speaker, a digital assistant, an augmented reality (AR)/virtual reality (VR) device, a smart wearable equipment and other types of electronic device. In some embodiments of the present disclosure, the operating system running on the electronic device may include, but is not limited to, an Android system, an IOS system, Linux, Windows, and the like.

In addition, it should be noted that what is shown in Fig. 1 is only an application environment provided by the present disclosure. In practical applications, other application environments may also be included, such as the training of the target image segmentation model, which may also be implemented on the terminal 02.

In some embodiments of this specification, the above-described server 01 and the terminal 02 may be directly or indirectly connected through wired or wireless communication, which is not limited in the present disclosure.

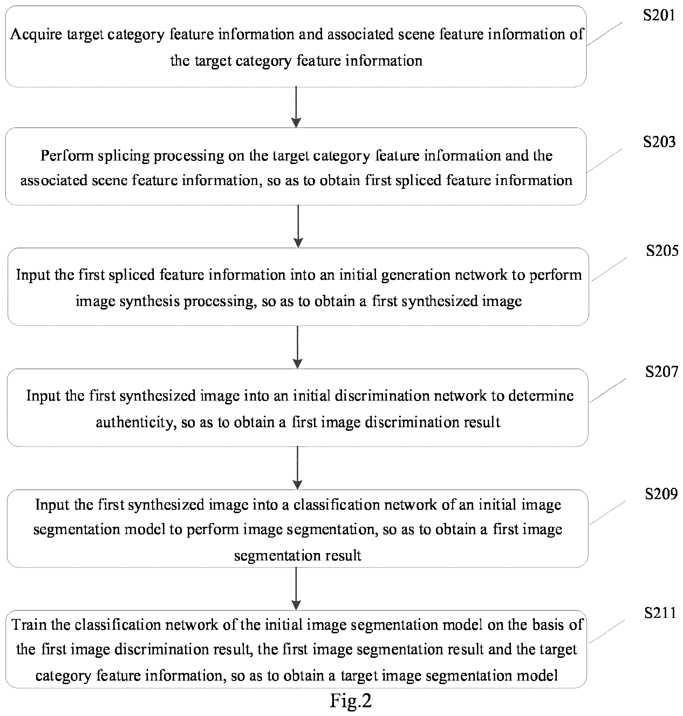

Fig. 2 is a flowchart of a method for training an image segmentation model according to an embodiment. As shown in Fig. 2, the method for training the image segmentation model may be applied to electronic devices such as servers, terminals, and edge computing nodes, including the following steps.

In S20 1, target category feature information and associated scene feature information of the target category feature information are obtained.

In some embodiments of the present disclosure, the target category feature information can represent the category features of the training samples and the prediction samples. In an embodiment, the category features of the training samples may be a large number of known category features, that is, the category features of the training samples used for training the target image segmentation model. The category features of the prediction samples are a large number of unknown category features, that is, the category features of images that do not participate in the training of the target image segmentation model. Correspondingly, the training samples may include a large number of training images used for training the target image segmentation model. The prediction samples may include a large number of images that do not participate in the training of the target image segmentation model and may be segmented (need to be predicted) by the trained target image segmentation model, that is, zero samples.

In an embodiment, acquiring the target category feature information includes: obtaining the category information of the training samples and the prediction samples; and, inputting the category information into a target word vector model to obtain the target category feature information.

In some embodiments of the present disclosure, although no prediction samples are obtained during training, the category information of the images to be segmented by the target image segmentation model in practical applications may be obtained as the category information of the prediction samples in combination with actual application requirements.

In an embodiment, the category information may be the category of the segmented object contained in a large number of images (ie., training samples or prediction samples). For example, an image includes a cat (a segmented object). Correspondingly, the category information of the image is cat.

In an embodiment, the target word vector model may be obtained by training a preset word vector model based on preset training text information. In an embodiment, the preset training text information may be text information related to the application field of the target image segmentation model.

In some embodiments of the present disclosure, in the process of training the target word vector model, the preset training text information may be subjected to word segmentation processing, and the word segmentation information (ie. each word) after the word segmentation processing may be input into the target word vector model for training. In the process of training, each word may be mapped into a K-dimensional real number vector, and when the target word vector model is obtained, a word vector set representing the semantic relevance between words may be obtained. In some embodiments of the present disclosure subsequently, the category information (word) may be input into the target word vector model, and the target word vector model may determine the word vector of the category information based on the word vectors in the word vector set, and may take the word vector of the category information as the target category feature information corresponding to the category information.

In an embodiment, the preset word vector model may include, but is not limited to, word vector models such as word2vec, fasttext, glove and the like.

In the above embodiments, by obtaining the corresponding category features of the training samples and the prediction samples as the training data of the initial image segmentation model, the recognition ability of the trained target image segmentation model for unknown categories may be improved, thereby greatly improving the segmentation accuracy.

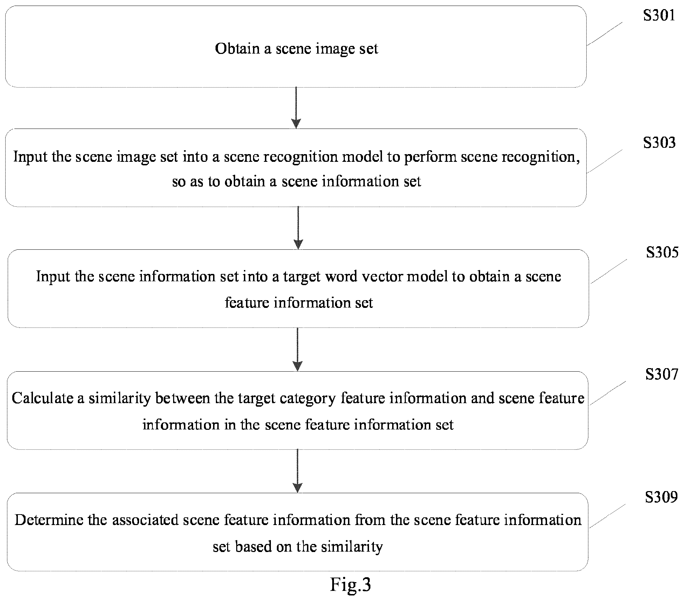

In an embodiment, as shown in Fig. 3, Fig. 3 is a flowchart of a method for acquiring associated scene feature information according to an embodiment. In some embodiments of the present disclosure, the method may include the following steps:

In S301, a scene image set is obtained.

In S303, the scene image set is input into the scene recognition model for scene recognition, and the scene information set is obtained.

In S305, the scene information set is input into the target word vector model to obtain the scene feature information set.

In S307, the similarity between the target category feature information and the scene feature information in the scene feature information set is calculated.

In S309, the associated scene feature information is determined from the scene feature information set based on the similarity.

In an embodiment, the scene image set may include images corresponding to a large number of scenes. The scene information set maybe scene information corresponding to a large number of images in the scene image set. For example, for an image taken in a bedroom, the scene information is a bedroom; for an image taken of a fish in a pond, the scene information may be the pond.

In an embodiment, an image with scene annotations can be used as training data to train a preset deep learning model to obtain a scene recognition model capable of scene recognition. Correspondingly, the scene image set is input into the scene recognition model for scene recognition, and the scene information set corresponding to the images in the scene image set may be obtained.

In some embodiments of the present disclosure, the preset deep learning model may include, but is not limited to, deep learning models such as convolutional neural networks, logistic regression neural networks, and recurrent neural networks.

In an embodiment, the scene information (word) in the scene information set is input into the target word vector model. The target word vector model may determine the word vector of the scene information based on the word vector in the word vector set, and take the word vector of the scene information as the scene feature information corresponding to the scene information.

In an embodiment, the target word vector model used to obtain the scene feature information set and the target word vector model used by the user to obtain the target category feature information are the same word vector model. That is, the obtained target word vector model is trained based on the same preset training text information, such that the accuracy of the semantic correlation between representation scene information and category information is further improved.

In an embodiment, the similarity between the target category feature information and the scene feature information may represent the semantic similarity between the words corresponding to the target category feature information and the scene feature information (category information and scene information). In some embodiments of the present disclosure, the higher the similarity between the target category feature information and the scene feature information is, the higher the semantic similarity between the words corresponding to the target category feature information and the scene feature information is. Conversely, the lower the similarity between the target category feature information and the scene feature information is, the lower the semantic similarity between the words corresponding to the target category feature information and the scene feature information is.

In an embodiment, the similarity between the target category feature information and the scene feature information may include, but is not limited to, the cosine distance, the Euclidean distance, and the Manhattan distance between the target category feature information and the scene feature information.

In an embodiment, the above-described target category feature information may include category feature information (word vectors) corresponding to multiple category information. Correspondingly, for each category information, the scene feature information of the top N similarity between the category feature information corresponding to the category information may be selected as the primary selection scene feature information, and one piece of scene feature information randomly may be selected from the primary selection scene feature information as the associated scene feature information of the category feature information.

In some embodiments of the present disclosure, for each category information, the scene feature information of similarity between the category feature information corresponding to the category information greater than or equal to a preset threshold may also be selected as the primary selection scene feature information, and one piece of scene feature information may be randomly selected from the primary selection scene feature information may be as the associated scene feature information of the category feature information.

In some embodiments of the present disclosure, the above-described preset threshold and N may be set according to actual application requirements.

In the above embodiment, by obtaining the associated scene feature information of the target category feature information, the prediction of the scene in which a certain category of segmentation objects appears may be realized, thereby it is ensured that the limit of scene in which the category appears may increase when subsequently the picture pixel features are automatically synthesized based on word vectors of unknown categories or known categories, such that the training of the image segmentation model is more focused on the synthesis of image pixel features in a specific scene.

In S203, splicing processing is performed on the target category feature information and the associated scene feature information to obtain first spliced feature information.

In an embodiment, performing splicing processing on the target category feature information and the associated scene feature information may include performing splicing processing on the category feature information corresponding to each category information in the target category feature information and the associated scene feature information of the category feature information. For example, the category feature information corresponding to a certain category information is [1, 2, 3, 4, 5]; the associated scene feature information of the category feature information is [6, 7, 8, 9, 0]. In some embodiments of the present disclosure, the first spliced feature information corresponding to the category information may be [1, 2, 3, 4, 5, 6, 7, 8, 9, 0], or [6, 7, 8, 9, 0, 1, 2, 3, 4, 5].

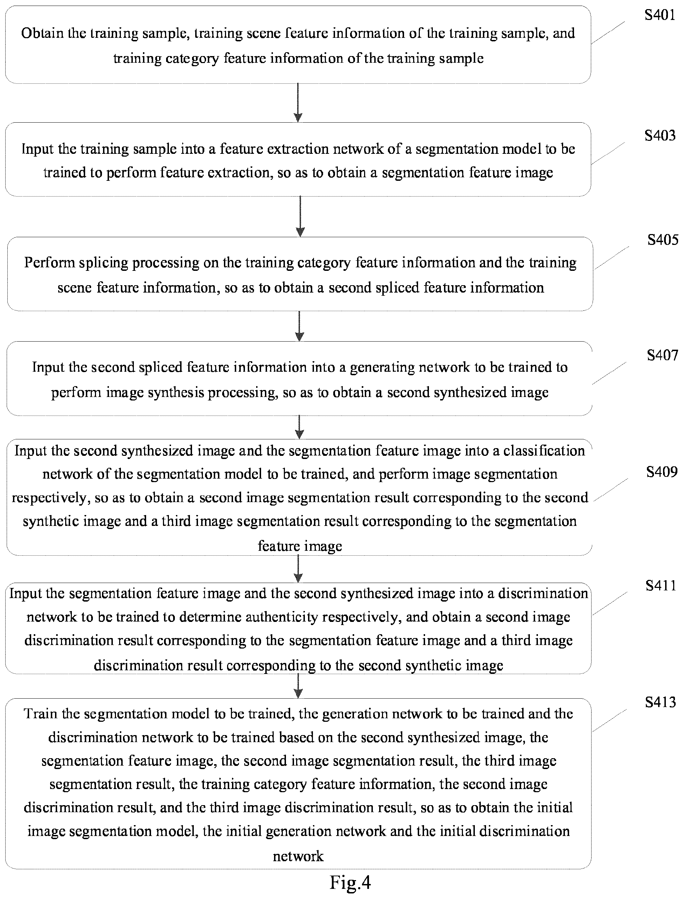

In an embodiment, in order to improve the accuracy of feature extraction in the zero-shot learning process, pre-training may be performed in combination with training samples, training scene feature information of the training samples, and training category feature information of the training samples. Correspondingly, as shown in Fig. 4, the above method may further include the following steps.

In S401, the training samples, training scene feature information of the training samples, and training category feature information of the training samples are obtained.

In some embodiments of the present disclosure, the training scene feature information may be a word vector of the scene information corresponding to the training samples. In an embodiment, the specific detailed step of obtaining the training scene feature information of the training samples may refer to the above-described specific detailed step of obtaining the scene feature information set of the scene image set, which will not be repeated here.

In some embodiments of the present disclosure, the training category feature information of the training samples may be a word vector of the category information corresponding to the training samples. In an embodiment, the specific detailed step of obtaining the training category feature information of the training samples may refer to the above-described related detailed step of obtaining the target category feature information, which will not be repeated here.

In S403, the training samples are input into the feature extraction network of the segmentation model to be trained to perform feature extraction to obtain a segmentation feature image.

In an embodiment, the segmentation model to be trained may include DeepLab (semantic image segmentation model), but the embodiments of the present disclosure are not limited to the above, and may also include other deep learning models in practical application.

In an embodiment, the segmentation model to be trained may include a feature extraction network and a classification network. In some embodiments of the present disclosure, the feature extraction network may be configured to extract feature information of images (training samples), the training samples may be input into the feature extraction network of the segmentation model to be trained to perform feature extraction, and a segmented feature image may be obtained.

In S405, splicing processing is performed on the training category feature information and the training scene feature information to obtain a second spliced feature information.

In an embodiment, the specific detailed step of performing the splicing processing on the training category feature information and the training scene feature information to obtain the second spliced feature information may refer to the above-described related detailed step of performing the splicing processing on the target category feature information and the associated scene feature information, which will not be repeated here.

In S407, the second spliced feature information is inputted into the generating network to be trained to perform image synthesis processing to obtain a second synthesized image.

In an embodiment, the generation network to be trained may be a generator in a GAN (Generative Adversarial Networks. By inputting the second spliced feature information into the generating network to be trained to perform image synthesis processing, the second synthesized image may be obtained.

In practical applications, camels often appear in desert scenes, fish often appear in oceans, ponds and other scenes, and the scenes where most objects (segmented objects) appear are limited. In the above embodiment, after the splicing processing is performed using the training category feature information and the training-associated scene feature information of the training samples, the second spliced feature information obtained is used to synthesize the synthesized image corresponding to the training samples, the limit of the scene in which the segmentation objects corresponding to the training samples appear may be increased, such that a second synthesized image that can accurately represent the category information and scene information of the segmented objects is obtained, which greatly improves the feature mapping ability of the training samples.

In S409, the second synthesized image and the segmentation feature image are inputted into the classification network of the segmentation model to be trained to perform image segmentation respectively, and a second image segmentation result corresponding to the second synthesized image and a third image segmentation result corresponding to the segmentation feature image are obtained.

In some embodiments of the present disclosure, the second synthesized image may include a synthesized image corresponding to each training image in the training samples; correspondingly, the second image segmentation result corresponding to each synthesized image here may represent the prediction category feature information of the synthesized image. In some embodiments of the present disclosure, the segmentation feature image may include image feature information corresponding to each training image in the training samples; correspondingly, the third image segmentation result corresponding to each image feature information here may represent the prediction category feature information of the image feature information.

In S411, the segmentation feature image and the second synthesized image are inputted into the discrimination network to be trained to determine authenticity respectively, and a second image discrimination result corresponding to the segmentation feature image and a third image discrimination result corresponding to the second synthesized image are obtained.

In an embodiment, the discriminant network to be trained may be a discriminator in a GAN. In some embodiments of the present disclosure, the second image discrimination result corresponding to the segmentation feature image may represent the prediction probability that the segmentation feature image is a real image; the third image discrimination result corresponding to the second synthesized image may represent the prediction probability that the second synthesized image is a real image. In some embodiments of the present disclosure, the real image may be a non-synthesized image.

In S413, the segmentation model to be trained , the generation network to be trained and the discrimination network to be trained are trained on the basis of the second synthesized image, the segmentation feature image, the second image segmentation result, the third image segmentation result, the training category feature information, the second image discrimination result, and the third image discrimination result to obtain the initial image segmentation model, the initial generation network and the initial discriminant network.

In an embodiment, the above-described training the segmentation model to be trained, the generation network to be trained and the discrimination network to be trained based on the second synthesized image, the segmentation feature image, the second image segmentation result, the third image segmentation result, the training category feature information, the second image discrimination result, and the third image discrimination result to obtain the initial image segmentation model, the initial generation network and the initial discrimination network may include: calculating a content loss using the second synthesized image and the segmentation feature image; calculating a second segmentation loss using the second image segmentation result, the third image segmentation result and the training category feature information; calculating a second discrimination loss using the second image discrimination result and the third image discrimination result; determining a second target loss based on the content loss, the second discrimination loss, and the second segmentation loss; updating a network parameter in the segmentation model to be trained, the generation network to be trained, and the discrimination network to be trained in the case that the second target loss does not satisfy a second preset condition; updating the second target loss based on the updated segmentation model to be trained, generation network to be trained, and discrimination network to be trained until the second target loss satisfies the second preset condition, and taking current segmentation model to be trained as the initial image segmentation model, current generation network to be trained as the initial generation network, and current discrimination network to be trained as the initial discrimination network.

In an embodiment, the content loss may reflect the difference between the second synthesized image generated by the generation network to be trained and the segmentation feature image. In an embodiment, the content loss may be the similarity distance between the second synthesized image corresponding to the training image in the training samples and the segmentation feature image. In an embodiment, the similarity distance between the second synthesized image and the segmentation feature image may include, but is not limited to, cosine distance, Euclidean distance, and Manhattan distance between the second synthesized image and the segmentation feature image. In an embodiment, the value of the content loss is proportional to the difference between the second synthesized image and the segmentation feature image. Correspondingly, the smaller the value of the content loss is, the higher the performance of the initial generation network obtained by training is.

In an embodiment, calculating a second segmentation loss using the second image segmentation result, the third image segmentation result and the training category feature information may include: calculating a first segmentation sub-loss between the second image segmentation result and the training category feature information, a second segmentation sub-loss between the third image segmentation result and the training category feature information based on a preset loss function; and weighting the first segmentation sub-loss and the second segmentation sub-loss to obtain the above-described second segmentation loss. The weights of the first segmentation sub-loss and the second segmentation sub-loss may be set according to actual application requirements.

In some embodiments of the present disclosure, the first segmentation sub-loss may represent the difference between each pixel of the second synthesized image and each pixel of the training category feature information; the second segmentation sub-loss may represent the difference between each pixel of the segmentation feature image and each pixel of the training category feature information.

In an embodiment, calculating a second discrimination loss using the second image discrimination result and the third image discrimination result may include: calculating a first discriminant sub-loss between the second image discrimination result and the authenticity label corresponding to the segmentation feature image, a second discriminant sub-loss between the third image discrimination result and the authenticity label corresponding to the second synthesized image based on a preset loss function; and weighting the first discriminant sub-loss and the second discriminant sub-loss to obtain the above-described second discrimination loss. The weights of the first discriminant sub-loss and the second discriminant sub-loss may be set according to actual application requirements.

In some embodiments of the present disclosure, the first discrimination loss may represent the difference between the second image discrimination result and the authenticity label corresponding to the segmentation feature image; the second discrimination loss may represent difference between the third image discrimination result and the authenticity label corresponding to the second synthesized image.

In an embodiment, since the segmentation feature image is a real image, correspondingly, the authenticity label corresponding to the segmentation feature image may be 1 (1 represents a real image). Since the second synthesized image is a synthesized image, not a real image, correspondingly, the authenticity label corresponding to the second synthesized image may be 0 (0 represents a non-real image, that is, a synthesized image);

In some embodiments of the present disclosure, the preset loss function may include, but is not limited to, a cross-entropy loss function, a logistic loss function, a Hinge (hinge) loss function, an exponential loss function, etc., and the embodiment of the present disclosure is not limited to the above. The loss functions used to calculate the discrimination loss and segmentation loss may be the same or different.

In an embodiment, after obtaining the content loss, the second segmentation loss and the second discrimination loss, a weighted calculation may be performed on the content loss, the second segmentation loss and the second discrimination loss to obtain the second target loss. In some embodiments of the present disclosure, the weights of the content loss, the second segmentation loss, and the second discrimination loss may be set according to actual application requirements.

In an embodiment, the second target loss satisfying the second preset condition may be that the second target loss is less than or equal to a specified threshold, or the difference between the corresponding second target loss in the two training processes before and after and the corresponding second target loss after the previous training and learning is less than a certain threshold. In some embodiments of the present disclosure, the specified threshold and a certain threshold may be set in combination with actual training requirements.

In practical applications, during the multiple iterations of model training, part of the training samples is randomly selected from the training samples each time to participate in this training. Correspondingly, updating the second target loss based on the updated segmentation model to be trained, the generation network to be trained, and the discrimination network to be trained may include randomly selecting part of the training samples from the training samples, the training category feature information and the training scene feature information of the part of the training samples, and repeating the steps of determining the second target loss in the above steps S403-S413 in combination with the updated segmentation model to be trained, the generation network to be trained, and the discrimination network to be trained.

In the above-described embodiment, in the pre-training process, the limit of scene information in which the segmentation objects corresponding to each category appear is increased, so that the training of the image segmentation model is more focused on the synthesis of image pixel features in a specific scene, which greatly improves the feature mapping ability of training samples. The second target loss is determined by combining the content loss, the second segmentation loss and the second discrimination loss, which may improve the similarity between the synthesized image generated by the trained initial generation network and the real sample, thereby improving the segmentation accuracy of the trained initial image segmentation model.

In S205, the first spliced feature information is input into the initial generation network to perform image synthesis processing to obtain a first synthesized image.

In an embodiment, the initial generation network may be obtained after pre-training the generator in the GAN based on the training category feature information of the training samples and the training scene feature information of the training samples. In some embodiments of the present disclosure, the first spliced feature information is input into the initial generation network to perform image synthesis processing to obtain the first synthesized image.

In the above-described embodiment, after performing the splicing processing using the category feature information corresponding to the category information and the associated scene feature information, the obtained first spliced feature information is used to synthesize the image corresponding to the category information, and the limit of the scene in which the segmentation objects corresponding to the category information appear is increased. The first synthesized image that can accurately represent the segmentation object category information and scene information may be obtained, which greatly improves the ability of feature mapping for unknown categories.

In S207, the first synthesized image is input into the initial discrimination network for authenticity discrimination to obtain a first image discrimination result.

In an embodiment, the initial discriminant network may be obtained by pre-training the discriminator in the GAN based on the training samples, the training category feature information of the training samples, and the training scene feature information of the training samples.

In some embodiments of the present disclosure, the first synthesized image may include a synthesized image corresponding to each training image in the training samples or each image in the prediction samples, and correspondingly, the first image discrimination result of each synthesized image here may represent the prediction probability that whether the synthesized image is a real training image or an image in the prediction samples.

In S209, the first synthesized image is input into the classification network of the initial image segmentation model to perform image segmentation, and a first image segmentation result is obtained.

In an embodiment, the initial image segmentation model is obtained by pre-training the segmentation model to be trained based on the training samples, the training scene feature information of the training samples, and the training category feature information of the training samples.

In some embodiments of the present disclosure, the first synthesized image is input into the classification network of the initial image segmentation model to perform image segmentation, and the first image segmentation result may be obtained. In some embodiments of the present disclosure, the first image segmentation result corresponding to the first synthesized image may represent the prediction category feature information of the first synthesized image.

In S211, the classification network of the initial image segmentation model is trained based on the first image discrimination result, the first image segmentation result and the target category feature information to obtain the target image segmentation model.

In an embodiment, training the classification network of the initial image segmentation model based on the first image discrimination result, the first image segmentation result and the target category feature information to obtain the target image segmentation model may include: calculating the first discrimination loss using the first image discrimination result and the authenticity label of the first synthesized image; calculating the first segmentation loss using the first image segmentation result and the target category feature information; determining the first target loss based on the first discrimination loss and the first segmentation loss; updating the network parameter in the classification network of the initial image segmentation model, the initial generation network and the initial discrimination network in the case that the first target loss does not satisfy the first preset condition; updating the first target loss based on the updated classification network of the initial image segmentation model, the initial generation network and the initial discriminant network until the first target loss satisfies the first preset condition, and taking the current initial image segmentation model as the target image segmentation model.

In an embodiment, calculating the first discrimination loss using the first image discrimination result and the authenticity label of the first synthesized image may include: calculating the discrimination loss between the first image discrimination result and the authenticity label of the first synthesized image based on a preset loss function, and taking the discrimination loss as the first discrimination loss. In some embodiments of the present disclosure, the first discrimination loss may represent the difference between the first image discrimination result and the authenticity label corresponding to the first synthesized image.

In an embodiment, since the first synthesized image is a synthesized image, not a real image, correspondingly, the authenticity label corresponding to the first synthesized image may be 0 (0 represents a non-real image, that is, a synthesized image).

In an embodiment, calculating the first segmentation loss using the first image segmentation result and the target category feature information may include: calculating a segmentation loss between the first image segmentation result and the target category feature information based on a preset loss function, and taking the segmentation loss as the first segmentation loss above. The first segmentation loss may represent the difference between each pixel of a synthesized image and each pixel of the target category feature information.

In some embodiments of the present disclosure, the above-described preset loss function may include but is not limited to a cross-entropy loss function, a logistic loss function, a Hinge (hinge) loss function, an exponential loss function, etc., and the embodiment of the present disclosure is not limited to the above. The loss functions used to calculate the discrimination loss and segmentation loss may be the same or different.

In an embodiment, after obtaining the first segmentation loss and the first discrimination loss, a weighted calculation may be performed on the first segmentation loss and the first discrimination loss to obtain the first target loss. In some embodiments of the present disclosure, the weights of the first segmentation loss and the first discrimination loss may be set according to actual application requirements.

In an embodiment, the first target loss satisfying the first preset condition may be that the input first target loss is less than or equal to a specified threshold, or the difference between the corresponding first target loss in the two training processes before and the corresponding first target loss after the previous training and learning is less than a certain threshold. In some embodiments of the present disclosure, the specified threshold and a certain threshold may be set in combination with actual training requirements.

In practical applications, during the multiple iterations of model training, part of the target category feature information from the target category feature information and the associated scene feature information of the part of the target category feature information are randomly selected each time to participate in this training. In some embodiments of the present disclosure, the unknown category features are randomly generated with a relatively larger probability, and the known category features are randomly generated with a relatively smaller probability. Correspondingly, the specific details of updating the first target loss based on the updated classification network of the initial image segmentation model, the initial generation network and the initial discriminant network may refer to the above-described specific detailed step of updating the second target loss based on the updated segmentation model to be trained, the generation network to be trained and the discrimination network to be trained, which will not be repeated here.

In the above embodiment, the first target loss is determined by combining the first image segmentation result determined by the first image segmentation result and the target category feature information and the second discrimination loss determined by the first image discrimination result and the authenticity label of the first synthesized image. On the basis of effectively ensuring the similarity between the first synthesized image generated by the initial generation network and the real sample (training sample or prediction sample), the classification network of the initial image segmentation model may be trained better, and the accuracy of zero-shot segmentation may be greatly improved.

It can be seen from the technical solutions provided in the above embodiments of the present disclosure that, in some embodiments of present disclosure, by obtaining the corresponding category features of the training samples and the prediction samples as the training data of the initial image segmentation model, the recognition ability of the trained target image segmentation model for unknown categories is improved. By obtaining associated scene feature information of the target category feature information, the prediction of the scene where a certain category of segmentation objects appear is realized, and then it is ensured that when the image pixel features are automatically synthesized based on the word vector of an unknown category or a known category, the limit of the scene in which the category appears is increased, such that the training of the image segmentation model is more focused for the synthesis of image pixel features in a specific scene, so as to better adjust the classification network in zero-shot image segmentation training using the scene context, with the accuracy of zero-shot segmentation being greatly improved.

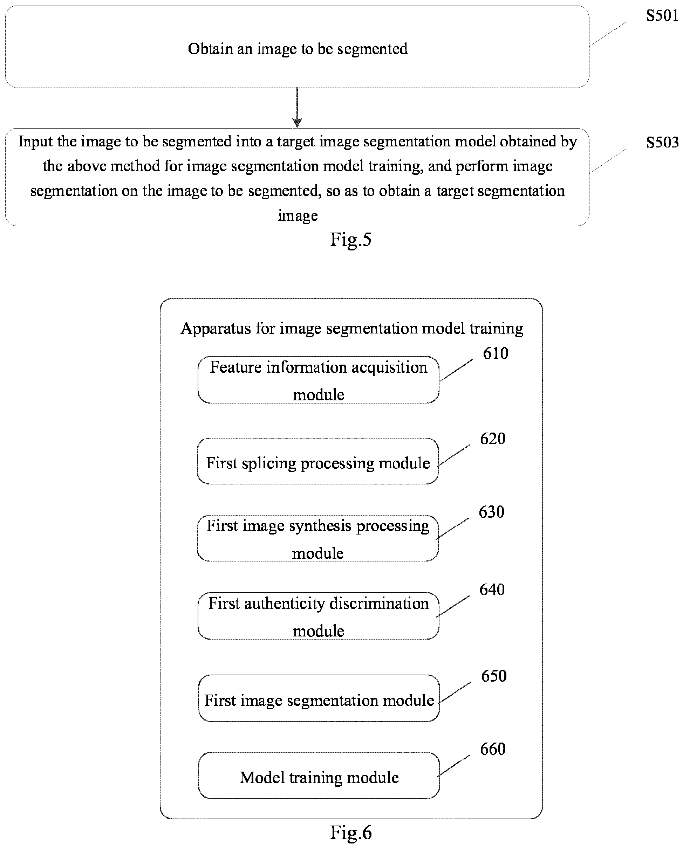

Based on the above embodiments of the method for training the image segmentation model, the following describes an embodiment of a method for image segmentation of the present disclosure. Fig. 5 is a flowchart of a method for image segmentation according to an embodiment. Referring to Fig. 5, the method may be applied to electronic devices such as servers, terminals, edge computing nodes, etc., and the method includes the following steps.

In S501, an image to be segmented is obtained.

In S503, the image to be segmented is input into the target image segmentation model trained by the above-described method for training an image segmentation model and image segmentation is performed on the image to be segmented to obtain the target segmented image.

In some embodiments of present disclosure, the image to be segmented may be an image needed to be segmented. In some embodiments of present disclosure, the image to be segmented may include a target segmentation object. Correspondingly, the target segmented image may be an image of the region where the target segmentation object is located in the image to be segmented.

In the above embodiment, in the training process of the target image segmentation model, by introducing the scene context, the classifier in the target image segmentation model can be better adjusted, the ability of the model feature mapping may be improved, and then, when the image segmentation is performed based on the target image segmentation model, the segmentation accuracy may be greatly improved and the error rate may be reduced.

Fig. 6 is a block diagram of an apparatus for training an image segmentation model according to an embodiment. Referring to Fig. 6, the apparatus includes: a feature information acquisition module 610, configured to perform acquiring target category feature information and associated scene feature information of the target category feature information, where the target category feature information represents the category feature of training sample and prediction sample;;a first splicing processing module 620, configured to perform splicing processing on the target category feature information and the associated scene feature information to obtain a first spliced feature information; a first image synthesis processing module 630, configured to perform image synthesis processing by inputting the first spliced feature information into an initial generation network to obtain a first synthesized image; a first authenticity discrimination module 640, configured to determine authenticity by inputting the first synthesized image into an initial discrimination network to obtain a first image discrimination result; a first image segmentation module 650, configured to perform image segmentation by inputting the first synthesized image into a classification network of an initial image segmentation model to obtain a first image segmentation result; and a model training module 660, configured to training the classification network of the initial image segmentation model on the basis of the first image discrimination result, the first image segmentation result and the target category feature information to obtain a target image segmentation model.

In some embodiments of the present disclosure, the feature information acquisition module 610 includes: a scene image set acquisition unit, configured to perform obtaining a scene image set; a scene recognition unit, configured to perform scene recognition by inputting the scene image set into a scene recognition model to obtain a scene information set; a scene feature information set acquisition unit, configured to perform inputting the scene information set into a target word vector model to obtain a scene feature information set; a similarity calculation unit, configured to perform calculating a similarity between the target category feature information and the scene feature information in the scene feature information set; and an associated scene feature information determination unit, configured to perform determining the associated scene feature information from the scene feature information set based on the similarity.

In some embodiments of the present disclosure, the feature information acquisition module 610 includes: a category information acquisition unit, configured to perform obtaining category information of the training sample and the prediction sample; and a target category feature information acquisition unit, configured to perform inputting the category information into a target word vector model to obtain target category feature information.

In some embodiments of the present disclosure, the model training module 660 includes: a first discrimination loss calculation unit configured to perform calculating a first discrimination loss using the first image discrimination result and the authenticity label of the first synthesized image; a first segmentation loss calculation unit, configured to perform calculating a first segmentation loss by using the first image segmentation result and the target category feature information; a first target loss determination unit, configured to perform determining a first target loss based on the first discrimination loss and the first segmentation loss; a first network parameter updating unit, configured to perform updating a network parameter in the classification network of the initial image segmentation model, the initial generation network and the initial discrimination network when the first target loss does not satisfy a first preset condition; and a target image segmentation model determination unit, configured to perform updating the first target loss based on the updated classification network of the initial image segmentation model, the initial generation network and the initial discriminant network until the first target loss satisfies the first preset condition, and taking current initial image segmentation model as the target image segmentation model.

In some embodiments of the present disclosure, the above apparatus further includes: a data acquisition module, configured to perform obtaining the training sample, training scene feature information of the training sample, and training category feature information of the training sample; a feature extraction module, configured to perform feature extraction by inputting the training sample into a feature extraction network of a segmentation model to be trained to obtain a segmentation feature image; a second splicing processing module, configured to perform splicing processing on the training category feature information and the training scene feature information to obtain a second spliced feature information; a second image synthesis processing module, configured to perform image synthesis processing by inputting the second spliced feature information into the generation network to be trained to obtain a second synthesized image; a second image segmentation module, configured to perform image segmentation respectively by inputting the second synthesized image and the segmentation feature image into the classification network of the segmentation model to be trained to obtain a second image segmentation result corresponding to the second synthesized image and a third image segmentation result corresponding to the segmentation feature image; a second authenticity discrimination module, configured to determine authenticity respectively by inputting the segmentation feature image and the second synthesized image into a discrimination network to be trained to obtain a second image discrimination result corresponding to the segmentation feature image and a third image discrimination result corresponding to the second synthesized image; and an initial model training module configured to perform training the segmentation model to be trained, the generation network to be trained and the discrimination network to be trained based on the second synthesized image, the segmentation feature image, the second image segmentation result, the third image segmentation result, the training category feature information, the second image discrimination result, and the third image discrimination result to obtain the initial image segmentation model, the initial generation network and the initial discrimination network.

In some embodiments of the present disclosure, the initial model training module includes: a content loss calculation unit, configured to perform calculating a content loss using the second synthesized image and the segmentation feature image; a second segmentation loss calculation unit, configured to perform calculating a second segmentation loss using the second image segmentation result, the third image segmentation result and the training category feature information; a second discrimination loss calculation unit, configured to perform calculating a second discrimination loss using the second image discrimination result and the third image discrimination result; a second target loss determination unit, configured to perform determining a second target loss based on the content loss, the second discrimination loss and the second segmentation loss; a second network parameter updating unit, configured to perform updating a second network parameter in the segmentation model to be trained, the generation network to be trained, and the discrimination network to be trained, in case that the second target loss does not satisfy a second preset condition; and an initial model determination unit, configured to perform updating the second target loss based on the updated segmentation model to be trained, the generation network to be trained, and the discrimination network to be trained until the second target loss satisfies the second preset condition, and taking current segmentation model to be trained as the initial image segmentation model, current generation network to be trained as the initial generation network, and current discrimination network to be trained as the initial discrimination network.

Regarding the apparatus in the above-described embodiment, the specific manner of each module to perform operations has been described in detail in some embodiments of the method, and will not be described in detail here.

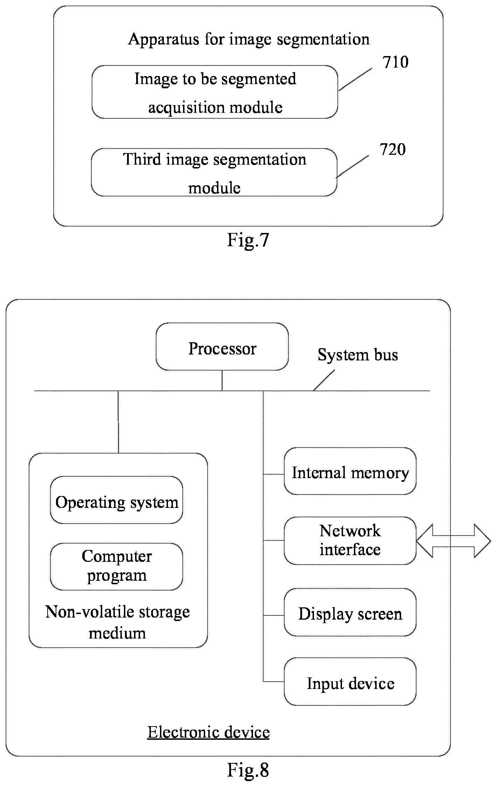

Fig. 7 is a block diagram of an apparatus for image segmentation according to an embodiment. Referring to Fig. 7, the apparatus includes: an image to be segmented acquisition module 710, configured to perform obtaining an image to be segmented; a third image segmentation module 720, configured to perform image segmentation on the image to be segmented by inputting the image to be segmented into a target image segmentation model obtained by the above method for training an image segmentation model training to obtain a target segmentation image.

Regarding the apparatus in the above-described embodiment, the specific manner of each module to perform operations has been described in detail in some embodiments of the method, and will not be described in detail here.

Fig. 8 is a block diagram of an electronic device for image segmentation model training or image segmentation according to an embodiment. The electronic device may be a terminal, and its internal structure diagram may be as shown in Fig. 8. The electronic device includes a processor, a memory, a network interface, a display screen, and an input device connected by a system bus. Among them, the processor of the electronic device is used to provide computing and control capabilities. The memory of the electronic device includes a non-volatile storage medium and an internal memory. The nonvolatile storage medium stores an operating system and a computer program. The internal memory provides an environment for the execution of the operating system and the computer program in the non-volatile storage medium. The network interface of the electronic device is used to communicate with an external terminal through a network connection. The computer program, when executed by a processor, implements a method for training an image segmentation model or image segmentation. The display screen of the electronic device may be a liquid crystal display screen or an electronic ink display screen, and the input device of the electronic device may be a touch layer covered on the display screen, or a button, a trackball or a touchpad set on the shell of the electronic device, or an external keyboard, trackpad, or mouse.

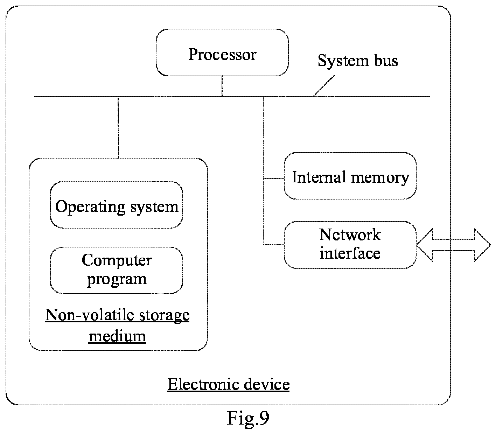

Fig. 9 is a block diagram of an electronic device for image segmentation model training or image segmentation according to an embodiment. The electronic device may be a server, and its internal structure diagram may be as shown in Fig. 9. The electronic device includes a processor, memory, and a network interface connected by a system bus. Among them, the processor of the electronic device is used to provide computing and control capabilities. The memory of the electronic device includes a non-volatile storage medium and an internal memory. The nonvolatile storage medium stores an operating system and a computer program. The internal memory provides an environment for the execution of the operating system and the computer program in the non-volatile storage medium. The network interface of the electronic device is used to communicate with an external terminal through a network connection. The computer program, when executed by a processor, implements a method for training an image segmentation model or image segmentation.

Those skilled in the art may understand that the structures shown in Fig. 8 and Fig. 9 are only block diagrams of partial structures related to the solution of the present disclosure, and do not constitute a limitation on the electronic device to which the solution of the present disclosure is applied. An electronic device may include more or fewer components than shown in the figures, or combine certain components, or have a different arrangement of components.

In an embodiment, there is also provided an electronic device, including: a processor; a memory for storing instructions executable by the processor; where, the processor is configured to execute the instructions to implement the method for training the image segmentation model or image segmentation method in some embodiments of the present disclosure.

In an embodiment, a storage medium is also provided. When the instructions in the storage medium are executed by a processor of an electronic device, the electronic device can execute the method for training the image segmentation model or image segmentation in some embodiments of the present disclosure.

In an embodiment, there is also provided a computer program product including instructions, which, when executed on a computer, causes the computer to perform the method for training the image segmentation model or image segmentation in some embodiments of the present disclosure.

Those of ordinary skill in the art may understand that all or part of the processes in the methods of the above embodiments may be implemented by instructing relevant hardware through a computer program, and the computer program may be stored in a non-volatile computer-readable storage medium, when the computer program is executed, it may include the processes of the above-described embodiments of the methods. Where, any reference to a memory, storage, database or other medium used in the various embodiments provided in the present disclosure may include non-volatile and/or volatile memory. Non-volatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM), etc.

All embodiments of the present disclosure can be implemented alone or in combination with other embodiments, which are regarded as the scope of protection required by the present disclosure.

## Claims

1. A method for training an image segmentation model, comprising:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

2. The method for training the image segmentation model according to claim 1, wherein, said acquiring the associated scene feature information comprises:
obtaining a scene information set by performing scene recognition through obtaining a scene image set and inputting the scene image set into a scene recognition model;
obtaining a scene feature information set by inputting the scene information set into a target word vector model;
calculating a similarity between the target category feature information and scene feature information in the scene feature information set; and
determining the associated scene feature information from the scene feature information set based on the similarity.

3. The method for training the image segmentation model according to claim 1, wherein, said acquiring the target category feature information comprises:
obtaining category information of the training sample and the prediction sample; and
obtaining the target category feature information by inputting the category information into a target word vector model.

4. The method for training the image segmentation model according to claim 1, wherein, said obtaining the target image segmentation model by training the classification network of the initial image segmentation model based on the first image discrimination result, the first image segmentation result and the target category feature information comprises:
calculating a first discrimination loss using the first image discrimination result and an authenticity label of the first synthesized image;
calculating a first segmentation loss using the first image segmentation result and the target category feature information;
determining a first target loss based on the first discrimination loss and the first segmentation loss;
updating a network parameter in a classification network of the initial image segmentation model, the initial generation network and the initial discrimination network, in the case that the first target loss does not satisfy a first preset condition; and
updating the first target loss based on the updated classification network of the initial image segmentation model, the initial generation network and the initial discriminant network until the first target loss satisfies the first preset condition, and taking current initial image segmentation model as the target image segmentation model.

5. The method for training the image segmentation model according to any one of claims 1 to 4, wherein, the method further comprises:
obtaining the training sample, training scene feature information of the training sample, and training category feature information of the training sample;
obtaining a segmentation feature image by performing feature extraction through inputting the training sample into a feature extraction network of a segmentation model to be trained;
obtaining a second spliced feature information by performing splicing processing on the training category feature information and the training scene feature information;
obtaining a second synthesized image by performing image synthesis processing through inputting the second spliced feature information into a generating network to be trained;
obtaining a second image segmentation result corresponding to the second synthesized image and a third image segmentation result corresponding to the segmentation feature image by performing image segmentation respectively through inputting the second synthesized image and the segmentation feature image into a classification network of the segmentation model to be trained
obtaining a second image discrimination result corresponding to the segmentation feature image and a third image discrimination result corresponding to the second synthesized image by determining authenticity respectively through inputting the segmentation feature image and the second synthesized image into a discrimination network to be trained; and
obtaining the initial image segmentation model, the initial generation network and the initial discrimination network by training the segmentation model to be trained, the generation network to be trained and the discrimination network to be trained based on the second synthesized image, the segmentation feature image, the second image segmentation result, the third image segmentation result, the training category feature information, the second image discrimination result, and the third image discrimination result.

6. The method for training the image segmentation model according to claim 5, wherein, said obtaining the initial image segmentation model, the initial generation network and the initial discrimination network by training the segmentation model to be trained, the generation network to be trained and the discrimination network to be trained based on the second synthesized image, the segmentation feature image, the second image segmentation result, the third image segmentation result, the training category feature information, the second image discrimination result, and the third image discrimination result comprises:
calculating a content loss using the second synthesized image and the segmentation feature image;
calculating a second segmentation loss using the second image segmentation result, the third image segmentation result and the training category feature information;
calculating a second discrimination loss using the second image discrimination result and the third image discrimination result;
determining a second target loss based on the content loss, the second discrimination loss, and the second segmentation loss;
updating a network parameter in the segmentation model to be trained, the generation network to be trained, and the discrimination network to be trained in the case that the second target loss does not satisfy a second preset condition; and
updating the second target loss based on the updated segmentation model to be trained, generation network to be trained, and discrimination network to be trained until the second target loss satisfies the second preset condition, and taking current segmentation model to be trained as the initial image segmentation model, current generation network to be trained as the initial generation network, and current discrimination network to be trained as the initial discrimination network.

7. A method for image segmentation, comprising:
obtaining an image to be segmented;
obtaining a target segmentation image by performing image segmentation on the image to be segmented through inputting the image to be segmented into a target image segmentation model, wherein,
the target image segmentation model is obtained according to a method for training an image segmentation model, and the method for training the image segmentation model comprises:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

8. An apparatus for training an image segmentation model, comprising:
a feature information acquisition module, configured to perform acquiring target category feature information and associated scene feature information of the target category feature information, wherein the target category feature information represents a category feature of a training sample and a prediction sample;
a first splicing processing module, configured to perform obtaining first spliced feature information by splicing processing on the target category feature information and the associated scene feature information;
a first image synthesis processing module, configured to perform obtaining a first synthesized image by performing image synthesis processing through inputting the first spliced feature information into an initial generation network;
a first authenticity discrimination module, configured to perform obtaining a first image discrimination result by determining authenticity through inputting the first synthesized image into an initial discrimination network;
a first image segmentation module, configured to perform obtaining a first image segmentation result by performing image segmentation through inputting the first synthesized image into a classification network of an initial image segmentation model; and
a model training module, configured to perform obtaining a target image segmentation mode by training the classification network of the initial image segmentation model based on the first image discrimination result, the first image segmentation result and the target category feature information.

9. The apparatus for training the image segmentation model according to claim 8, wherein the feature information acquisition module comprises:
a scene image set acquisition unit, configured to perform obtaining a scene image set;
a scene recognition unit, configured to perform obtaining a scene feature information set by inputting the scene image set into a scene recognition model;
a scene feature information set acquisition unit, configured to perform obtaining a scene feature information set by inputting the scene information set into a target word vector model;
a similarity calculation unit, configured to perform calculating a similarity between the target category feature information and scene feature information in the scene feature information set; and
an associated scene feature information determination unit, configured to perform determining the associated scene feature information from the scene feature information set based on the similarity.

10. The apparatus for training the image segmentation model according to claim 8, wherein, the feature information acquisition module comprises:
a category information acquisition unit, configured to perform obtaining category information of the training sample and the prediction sample; and
a target category feature information acquisition unit, configured to perform obtaining the target category feature information by inputting the category information into a target word vector model.

11. The apparatus for training the image segmentation model according to claim 8, wherein, the model training module comprises:
a first discrimination loss calculation unit, configured to perform calculating a first discrimination loss using the first image discrimination result and an authenticity label of the first synthesized image;
a first segmentation loss calculation unit, configured to perform calculating a first segmentation loss using the first image segmentation result and the target category feature information;
a first target loss determination unit, configured to perform determining a first target loss based on the first discrimination loss and the first segmentation loss;
a first network parameter updating unit, configured to perform updating a network parameter in a classification network of the initial image segmentation model, the initial generation network and the initial discrimination network, in the case that the first target loss does not satisfy a first preset condition; and
a target image segmentation model determination unit, configured to perform updating the first target loss based on the updated classification network of the initial image segmentation model, the initial generation network and the initial discriminant network until the first target loss satisfies the first preset condition, and taking current initial image segmentation model as the target image segmentation model.

12. The apparatus for training the image segmentation model according to any one of claims 8 to 11, wherein, the apparatus further comprises:
a data acquisition module, configured to perform obtaining the training sample, training scene feature information of the training sample, and training category feature information of the training sample;
a feature extraction module, configured to perform obtaining a segmentation feature image by performing feature extraction through inputting the training sample into a feature extraction network of a segmentation model to be trained;
a second splicing processing module, configured to perform obtaining a second spliced feature information by performing splicing processing on the training category feature information and the training scene feature information;
a second image synthesis processing module, configured to perform obtaining a second synthesized image by performing image synthesis processing through inputting the second spliced feature information into a generating network to be trained;
a second image segmentation module, configured to perform obtaining a second image segmentation result corresponding to the second synthesized image and a third image segmentation result corresponding to the segmentation feature image by performing image segmentation respectively through inputting the second synthesized image and the segmentation feature image into a classification network of the segmentation model to be trained;
a second authenticity discrimination module, configured to perform obtaining a second image discrimination result corresponding to the segmentation feature image and a third image discrimination result corresponding to the second synthesized image by determining authenticity respectively through inputting the segmentation feature image and the second synthesized image into a discrimination network to be trained; and
an initial model training module, configured to perform obtaining the initial image segmentation model, the initial generation network and the initial discrimination network by training the segmentation model to be trained, the generation network to be trained and the discrimination network to be trained based on the second synthesized image, the segmentation feature image, the second image segmentation result, the third image segmentation result, the training category feature information, the second image discrimination result, and the third image discrimination result.

13. The apparatus for training the image segmentation model according to claim 12, wherein, the initial model training module comprises:
a content loss calculation unit, configured to perform calculating a content loss using the second synthesized image and the segmentation feature image;
a second segmentation loss calculation unit, configured to perform calculating a second segmentation loss using the second image segmentation result, the third image segmentation result and the training category feature information;
a second discrimination loss calculation unit, configured to perform calculating a second discrimination loss using the second image discrimination result and the third image discrimination result;
a second target loss determination unit, configured to perform determining a second target loss based on the content loss, the second discrimination loss and the second segmentation loss;
a second network parameter updating unit, configured to perform updating a network parameter in the segmentation model to be trained, the generation network to be trained, and the discrimination network to be trained, in case that the second target loss does not satisfy a second preset condition; and
an initial model determination unit, configured to perform updating the second target loss based on the updated segmentation model to be trained, the generation network to be trained, and the discrimination network to be trained until the second target loss satisfies the second preset condition, and taking current segmentation model to be trained as the initial image segmentation model, current generation network to be trained as the initial generation network, and current discrimination network to be trained as the initial discrimination network.

14. An apparatus for image segmentation, comprising:
an image to be segmented acquisition module, configured to perform obtaining an image to be segmented;
a third image segmentation module, configured to perform obtaining a target segmentation image by performing image segmentation on the image to be segmented through inputting the image to be segmented into a target image segmentation model,
wherein, the target image segmentation model is obtained according to a method for training an image segmentation model, and the method for training the image segmentation model comprises:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

15. An electronic device, comprising:
a processor;
a memory, configured to store an instruction executable by the processor;
wherein, the processor is configured to execute the instruction to implement a method for training an image segmentation model, and the method for training the image segmentation model comprises:
acquiring g target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

16. An electronic device, comprising:
a processor;
a memory, configured to store executable an instruction by the processor-;
wherein, the processor is configured to execute the instruction to implement a method for image segmentation, the method for image segmentation comprises:
obtaining an image to be segmented;
obtaining a target segmentation image by performing image segmentation on the image to be segmented through inputting the image to be segmented into a target image segmentation model,
wherein, the target image segmentation model is obtained according to a method for training an image segmentation model, and the method for training the image segmentation model comprises:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

17. A computer-readable storage medium, wherein, when an instruction in the storage medium is executed by a processor of an electronic device, a method for training an image segmentation model is executed by the electronic device, and the method for training the image segmentation model comprises:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.

18. A computer-readable storage medium, wherein, when an instruction in the storage medium is executed by a processor of an electronic device, a method for image segmentation is executed by the electronic device, the method for image segmentation comprises:
obtaining an image to be segmented;
obtaining a target segmentation image by performing image segmentation on the image to be segmented through inputting the image to be segmented into a target image segmentation model,
wherein, the target image segmentation model is obtained according to a method for training an image segmentation model, and the method for training the image segmentation model comprises:
acquiring target category feature information and associated scene feature information of the target category feature information, wherein the target category feature information represents a category feature of a training sample and a prediction sample;
obtaining first spliced feature information by performing splicing processing on the target category feature information and the associated scene feature information;
obtaining a first synthesized image by performing image synthesis processing through inputting the first spliced feature information into an initial generation network;
obtaining a first image discrimination result by determining authenticity through inputting the first synthesized image into an initial discrimination network;
obtaining a first image segmentation result by performing image segmentation through inputting the first synthesized image into a classification network of an initial image segmentation model; and
obtaining a target image segmentation model by training the classification network of the initial image segmentation model based on the first image discrimination result, the first image segmentation result and the target category feature information.
